# EUROPEAN PATENT SPECIFICATION

(11) **EP 2 762 011 B1**
(45) Date of publication and mention of the grant of the patent: **19.06.2019**
(21) Application number: 12835848.8
(22) Date of filing: 27.09.2012
(51) Int. Cl.: A23L 27/21, A23L 27/22

(54) **AMINO ACID SEASONING COMPOSITION COMPRISING L-GLUTAMIC ACID AND BASIC AMINO ACIDS**
AMINOSÄURE-GEWÜRZZUSAMMENSTELLUNG MIT L-GLUTAMINSÄURE UND BASISCHEN AMINOSÄUREN
COMPOSITION D'ASSAISONNEMENT À BASE D'ACIDES AMINÉS COMPRENANT UN ACIDE L-GLUTAMIQUE ET DES ACIDES AMINÉS BASIQUES

(30) Priority: 30.09.2011 KR 20110099558; 28.12.2011 KR 20110144456; 27.06.2012 KR 20120069380
(43) Date of publication of application: 06.08.2014
(73) Proprietor: Daesang Corporation, Seoul 130-811 (KR)
(72) Inventor: PARK, Dong Cheol, Gyeonggi-do 440-330 (KR); KIM, Yong Duk, Gyeonggi-do 463-715 (KR); JUN, Hye Seung, Seoul 133-811 (KR); HAN, Min Ho, Gyeonggi-do 463-795 (KR); PARK, Bok Jun, Gyeonggi-do 448-753 (KR); KANG, Ki Kueon, Gyeonggi-do 467-725 (KR)
(74) Representative: Plougmann Vingtoft a/s
(86) International application number: PCT/KR2012/007827
(87) International publication number: WO 2013/048147

(56) References cited:
- EP-A1- 2 119 372
- AT-B- 224 422
- CA-A- 844 557
- JP-A- 2002 325 549
- JP-A- 2006 075 101
- JP-A- 2007 089 557
- JP-A- 2009 148 216
- JP-A- 2011 062 167
- US-A- 5 711 985
- L. NINNI ET AL: "Water Activity, pH and Density of Aqueous Amino Acids Solutions", BIOTECHNOLOGY PROGRESS, vol. 17, no. 4, 3 August 2001 (2001-08-03) , pages 703-711, XP055190435, ISSN: 8756-7938, DOI: 10.1021/bp0100427

## Description

### FIELD OF THE INVENTION

The present invention relates to a complex amino acid seasoning composition which is in the form of a powder, comprising a mixture of L-glutamic acid, L-lysine and L-arginine.

### DESCRIPTION OF THE RELATED ART

L-Lysine is an essential amino acid in human that is likely to be deficient in oriental people of which main dish is cereal foods. It plays a role as a protein precursor for skeletal muscle. In addition, it has been reported to be involved in a variety of physiological functions including biosynthesis of carnitine facilitating fatty acid metabolism, promotion of calcium absorption for children's growth and development, and immune enhancing effects as well as enhancement of gastrointestinal system upon feeding with glutamic acid and/or arginine.

L-Glutamic acid is one of acidic amino acids found plentifully in animal proteins such as beef meats, chicken meats and poke meats, plant proteins such as tomato, beans, mushrooms and seaweeds, and breast milk. L-Glutamic acid plays a critical role in amino acid metabolism. Furthermore, it serves as a main precursor for glutamine capable of detoxification of ammonia. L-Glutamic acid is also highlighted as neurotransmitters involved in brain functions such as cognitive and memory potentials. L-Glutamic acid is a precursor for arginine, proline and glutathione, which contributes to not only integrity of mucous membrane but also promotion of intestinal tract development for nutrition absorption. In addition to this, L-Glutamic acid has been reported as a component of folic acid and a precursor for glutathione as antioxidants.

A seasoning is one of the most important materials in the food industry field. Monosodium glutamate (MSG) as a representative of seasonings has been widely used into various food products. Furthermore, other seasonings including yeast extract, hydrolyzed vegetable protein (HVP) and soy source are also frequently used. However, the conventional seasonings prepared by hydrolysis of protein sources have serious shortcomings such as amino acid-derived offensive odor, bitterness by non-hydrolyzed peptides and higher market price. In this regard, the conventional seasonings have limitations in a wider application to the food industry field.

In recent years, a multitude of intensive reaches have been made to develop novel seasoning materials with lower sodium content and higher nutritional factors that are helpful in prevention of metabolic syndromes as lifestyle diseases and healthy life.

U.S. Pat. No. 4563359 (1986) discloses seasoning compositions comprising a glutamate salt mixture for increasing umami taste and decreasing a sodium content, wherein potassium, ammonium and calcium ions as an inorganic couterion are mixed with glutamic acid. However, the seasoning compositions have shortcomings such as decrease in umami taste, inhomogeneous offensive odor affected by types of inorganic ions and decrease in safety and solubility. Therefore, it would be appreciated that the seasoning composition is not used as a general seasoning material as MSG, since there are limitations in their preparation and application to food products.

Japanese Pat. No. 18486 (1961) by Kyowa Corp. suggests technologies with formation of L-glutamic acid·L-lysine crystal salts. However, L-glutamic acid and L-lysine crystal are not homogeneously mixed because they show different solubility to crystallization solvents such as methyl alcohol and ethyl alcohol, which is very likely to induce problems in sensory properties such as bitterness, sourness and amino acid-derived offensive odor (see U.S. Pat. No. 4563359).

Furthermore, there are some prior patent publications on seasoning materials for improving tastes (umami and saltiness), nutrition and cost-effectiveness, including U.S. Pat. Pub. No. 20110064861 (2011) for glutamic acid-containing amino acid compositions and Korean Pat. No. 0130012 (2009) for branched chain amino acid (BCAA)-containing compositions.

JP2007089557 discloses a liquid seasoning composition. The document further discloses a method for preparing amino acid composition in the amorphous form, comprising mixing L-glutamic acid and L-lysine in a solution.

US 5.711.985 discloses a composition for enhancing a taste comprising dehydrated proteolyzed protein including 0.2% to 3% free lysine and 0.2% to 3% free arginine, and ammonium salt.

CA844557 discloses a seasoning composition containing 7 amino acids (glutamic acid, alanine, histidine, arginine, threonine, methionine and leucine), wherein said 6 amino acids (alanine, histidine, arginine, threonine, methionine and leucine) are in an amount exceeding 30% by weight of the total amount of amino acids exclusive of glutamic acid.

### TECHNICAL PROBLEMS TO BE SOLVED

As described hereinabove, there have been few conventional technologies to enhance both saltiness and umami while a multitude of approaches have been successful in enhancing saltiness.

In conventional technologies accompanied with formation of L-glutamic acid·L-lysine crystals in alcohols, it is very difficult to adjust a mixing ratio of L-glutamic acid and L-lysine. Where a relative amount of L-lysine becomes larger, offensive odor originated from amino acids becomes problematic. Where a relative amount of L-glutamic acid becomes larger, the problems of sensory properties such as sourness and bitterness occur.

The present inventors have made intensive researches to develop novel amino acid seasoning composition with excellent sensory properties (improved saltiness and umami) as well as improved nutritional properties (*e.g.,* sodium reduction effects). As a result, the present inventors have developed plausible amino acid seasoning compositions prepared in such a manner that L-glutamic acid as acidic amino acids and L-lysine as basic amino acids are mixed at a mole ratio sufficient to exhibit pH 6.5-8.0 (preferably pH 6.5-7.8, more preferably pH 6.5-7.5) in an aqueous solution and then dried (*e.g.,* by spray drying or freeze drying), thereby providing amino acid seasoning compositions with excellent sensory and nutritional properties in the non-crystalline form or amorphous form. According to the present invention, the amino acid seasoning compositions are provided with maintaining the initial mole ratio of L-glutamic acid and L-lysine and with no formation of L-glutamic acid·L-lysine crystals.

According to conventional technologies with formation of L-glutamic acid·L-lysine crystals, serious problems in sensory properties such as increase in sourness and bitterness are very likely to occur because of some limitations inherent in the production process.

Therefore, conventional approaches with formation of L-glutamic acid·L-lysine crystals are unsuitable in preparation of seasoning compositions. However, the complex amino acid seasoning composition of the present invention is completely free from the shortcomings of conventional technologies in terms of sensory properties and shows excellent sensory properties (improved saltiness and umami). The preparation method of the present disclosure with no formation of L-glutamic acid·L-lysine crystals is carried out in a more convenient and cost-effective manner than conventional technologies. In this regard, the method of the present disclosure is advantageous over conventional technologies in terms of sensory properties, applicability and cost-effectiveness.

Accordingly, it is an object of this invention to provide a complex amino acid seasoning composition.

It is another object of the present disclosure to provide a method for seasoning a food with reducing sodium.

It is still another object of the present disclosure to provide a food product or functional food product.

It is further object of the present disclosure to provide a method for preparing a complex amino acid seasoning composition.

It is still further object of the present disclosure to provide a method for removing a offensive odor of an amino acid seasoning composition.

Other objects and advantages of the present invention will become apparent from the detailed description to follow taken in conjugation with the appended claims and drawings.

### DETAILED DESCRIPTION OF THIS INVETNION

In one aspect of the present invention, there is provided a complex amino acid seasoning composition which is in the form of a powder, comprising a mixture of 47 to 50wt% L-glutamic acid, 45 to 48wt% L-lysine and 4 to 5wt% L-arginine based on the total weight of the composition, wherein the complex amino acid seasoning composition is in an amorphous form and has a pH of 6.8-7.5 in an aqueous solution and; wherein the L-glutamic acid the L-lysine and the L-arginine in the complex amino acid seasoning composition are not linked to each other by a covalent bond.

As described hereinabove, there have been few conventional technologies to enhance both saltiness and umami while a multitude of approaches have been successful in enhancing saltiness. In conventional technologies accompanied with formation of L-glutamic acid·L-lysine crystals in alcohols, it is very difficult to adjust a mixing ratio of L-glutamic acid and L-lysine. Where a relative amount of L-lysine becomes larger, offensive odor originated from amino acids becomes problematic. Where a relative amount of L-glutamic acid becomes larger, the problems of sensory properties such as sourness and bitterness occur.

The present inventors have made intensive researches to develop novel amino acid seasoning composition with excellent sensory properties (improved saltiness and umami) as well as improved nutritional properties (*e.g*., sodium reduction effects). As a result, the inventors have developed plausible amino acid seasoning compositions prepared in such a manner that L-glutamic acid as acidic amino acids and L-lysine as basic amino acids are mixed at a mole ratio sufficient to exhibit pH 6.5-8.0 (preferably pH 6.5-7.8, more preferably pH 6.5-7.5) in an aqueous solution and then dried (*e.g.,* by spray drying or freeze drying), thereby providing amino acid seasoning compositions with excellent sensory and nutritional properties in the non-crystalline form or amorphous form. According to the present disclosure, the amino acid seasoning compositions are provided with maintaining the initial mole ratio of L-glutamic acid and L-lysine and with no formation of L-glutamic acid·L-lysine crystals.

According to conventional technologies with formation of L-glutamic acid·L-lysine crystals, serious problems in sensory properties such as increase in sourness and bitterness are very likely to occur because of some limitations inherent in the production process.

Therefore, conventional approaches with formation of L-glutamic acid·L-lysine crystals are unsuitable in preparation of seasoning compositions. However, the complex amino acid seasoning composition of the present invention is completely free from the shortcomings of conventional technologies in terms of sensory properties and shows excellent sensory properties (improved saltiness and umami). The preparation method of the present disclosure with no formation of L-glutamic acid·L-lysine crystals is carried out in a more convenient and cost-effective manner than conventional technologies. In this regard, the method of the present disclosure is advantageous over conventional technologies in terms of sensory properties, applicability and cost-effectiveness.

The term used herein "seasoning" refers to materials for altering or enhancing tastes or flavors of natural food products (*e.g.,* meats and vegetables) and processed food products (*e.g.,* candy and snack). The seasonings may be prepared by physical methods, chemical methods, microbial methods or enzymatic methods. The seasonings may be classified into natural seasonings, nature-equivalent seasonings and synthesized seasonings (The Flavourings in Food Regulations, Amended 1994).

The seasonings may be provided as either solid seasonings or liquid seasonings. The present disclosure may provide a liquid seasoning by preparation in aqueous solution or paste and a solid seasoning by drying process.

To the best of the inventors knowledge, the present disclosure is the first suggestion to enhance sensory properties of an amino acid seasoning by mixing L-glutamic acid with a basic amino acid. The pH of the amino acid seasoning disclosed herein is adjusted to 6.5-8.0 in aqueous solution by adjusting the content of amino acids used to highly enhance sensory properties.

The critical factor for enhancing taste in the amino acid seasoning of the present invention is pH in aqueous solution. The pH of the amino acid seasoning is 6.8-7.5, preferably 7.0-7.2.

The adjustment of pH values ensures to increase saltiness, umami and richness and decrease sourness, thereby considerably improving overall sensory properties.

The amino acid seasoning composition of the present disclosure comprises L-glutamic acid and a basic amino acid (preferably L-basic amino acid, more preferably L-lysine).

Preferably, the basic amino acid useful in the present disclosure is an amino acid having above pH 9.0 in aqueous solution, more preferably an amino acid selected from the group consisting of L-lysine, L-arginine, ornitine, citrulline and combination thereof, still more preferably a basic amino acid selected from the group consisting of L-lysine, L-arginine and combination thereof.

The amino acid seasoning composition of the present invention comprises L-glutamic acid, L-lysine and L-arginine.

Where the amino acid seasoning composition disclosed herein comprises L-lysine and L-arginine, it is preferable that L-lysine is in the amount of 30-59 wt% (more preferably 40-50 wt%, still more preferably 43-48 wt%, still further more preferably 45-47 wt%) based on the total weight of the composition and L-arginine is in the amount of 1-20 wt% (more preferably 1-10 wt%, still more preferably 3-8 wt%, still further more preferably 4-5 wt%) based on the total weight of the composition.

The inventive amino acid seasoning composition comprises L-glutamic acid, L-lysine and L-arginine, the amounts of L-glutamic acid, L-lysine and L-arginine are 47-50 wt%, 45-48 wt% and 4-5 wt%, respectively.

### Embodiments of the Amino Acid Seasoning Composition

According to a preferred disclosed embodiment, the present composition comprises L-glutamic acid and L-lysine. Preferably, the composition is in the amorphous form.

In another aspect of the present disclosure, there is provided a complex amino acid seasoning composition, comprising L-glutamic acid and L-lysine; wherein the composition is in the amorphous form and exhibits pH 6.5-8.0 in an aqueous solution.

The prominent feature of the present invention is the amorphous form of the complex amino acid seasoning composition. The amorphous form is responsible for significant enhancement of saltiness and umami accomplished by the present invention. The conventional amino acid seasoning compositions containing L-glutamic acid and L-lysine have crystalline forms and therefore have shortcomings in terms of sensory properties such as increase in sourness and bitterness and offensive odors of amino acids, resulting in worse applicability as seasoning compositions (see U.S. Pat. 4563359).

The term used herein "amorphous form" also called as non-crystal form or non-crystalline form refers to forms lacks the long-range order characteristic of a crystal. The solids may be classified into solids in a crystal form with ordered planes and angles and solids in an amorphous form with non-ordered appearance.

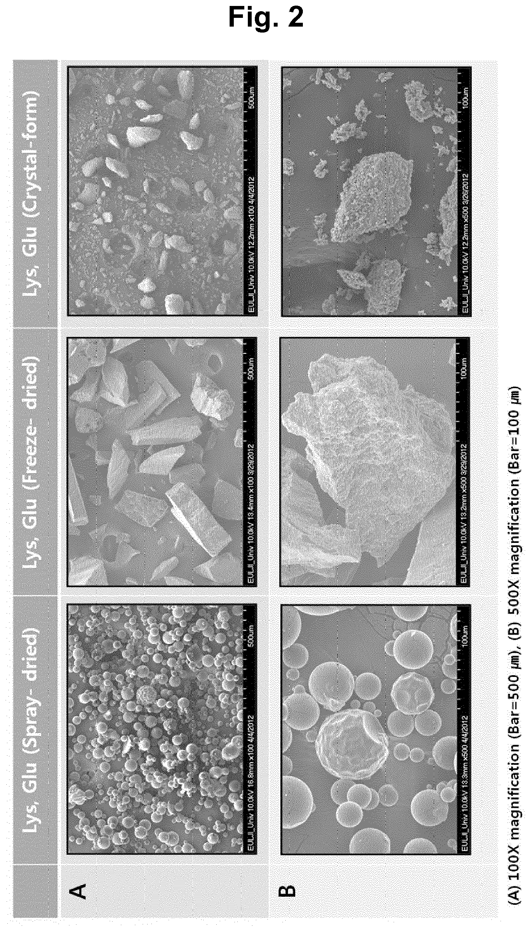

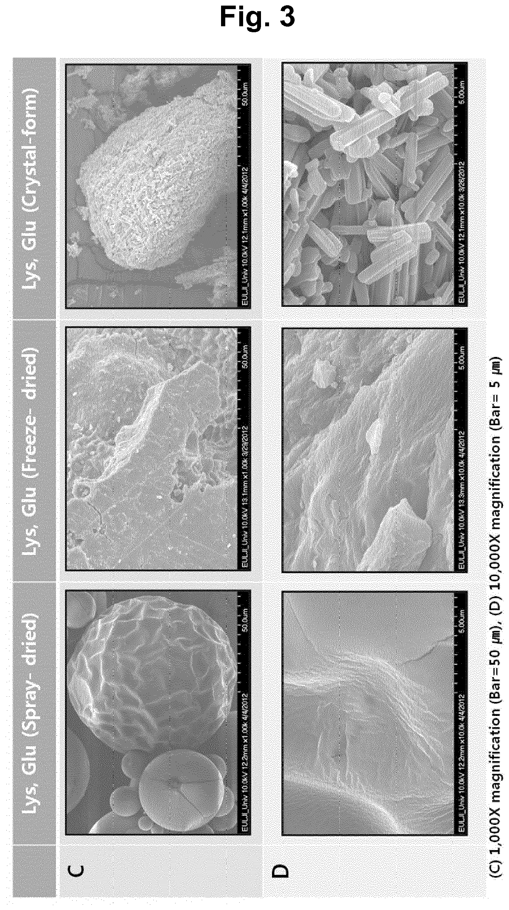

The seasoning composition is in the amorphous form, which has been observed by electron microscope analysis (see Example 2, Figs. 2 and 3). The amorphous form of the present seasoning composition has been distinctly different from conventional seasoning compositions with L-glutamic acid·L-lysine crystals under electron microscope observations (see Example 2, Figs. 2 and 3).

The seasoning composition comprises L-glutamic acid and L-lysine. Preferably, L-glutamic acid and L-lysine contained in the present composition are in the free base form. The free base forms of L-glutamic acid and L-lysine are helpful in adjusting accurately pH range of the present composition. For adjustment of pH value, it is critical to homogeneously mix L-glutamic acid (in the form of solution or powder) as acid amino acids and L-lysine (in the form of solution or powder) as basic amino acids. Preferably, the L-glutamic acid powder and L-lysine powder are homogeneously mixed in a solution (preferably, aqueous solution). Interestingly, the initial amount and mole ratio of L-glutamic acid and L-lysine is not substantially altered in the final seasoning composition, contributing to excellent sensory properties of the present composition.

L-glutamic acid used may be prepared in accordance with various methods known to one of skill in the art such as fermentation using suitable microbes.

According to a preferred embodiment, L-glutamic acid used is in the free base form, more preferably in the free base form with no counterions. The conventional amino acid seasoning compositions generally contain L-glutamic acid in the salt form, whereas the present seasoning composition contains L-glutamic acid in the free base form.

According to a disclosed embodiment, L-glutamic acid is in the amount of 30-90 wt% or 40-90 wt%, more preferably 30-60 wt%, still more preferably 40-50 wt%, still further more preferably 45-49.2 wt%, most preferably 48.5-49.2 wt% based on the total weight of the composition.

The term used herein "wt%" refers to a percentage content of an amino acid based on the total amount of amino acids contained in the amino acid seasoning composition.

According to the present invention, L-lysine as basic amino acids is selected as partner to synergistically enhance sensory properties of the present seasoning composition along with L-glutamic acid.

L-lysine used may be prepared in accordance with various methods known to one of skill in the art such as fermentation and purification. For instance, L-lysine used may be prepared in such a manner that L-lysine in the crystalline salt form (*e.g.,* L-lysine hydrochloric acid salt) is dissolved and desalted through cation exchange column. In addition, L-lysine used may be prepared by purification of liquid fermented products to obtain L-lysine with higher purity.

According to a preferred embodiment, L-lysine used is in the free base form, more preferably in the free base form with no counterions.

According to a disclosed embodiment, L-lysine is in the amount of 10-70 wt% or 10-60 wt%, more preferably 40-70 wt%, still more preferably 50-60 wt%, still further more preferably 50.8-55.0 wt%, most preferably 50.8-51.5 wt% based on the total weight of the composition.

To the best of the present inventors knowledge, the present disclosure is the first attempt in which L-glutamic acid is mixed with L-lysine at a specific mole ratio to enhance sensory properties of seasoning compositions, providing improved seasoning compositions. The two types of amino acids are used at a mole ratio sufficient to show pH 6.5-8.0 (preferably pH 6.5-7.8, more preferably pH 6.5-7.5) in an aqueous solution, leading to significant improvement in sensory properties of the seasoning composition.

One of the critical factors determining sensory properties of the seasoning composition of the present invention is a pH value at a liquid state. The pH value of the present seasoning composition at an aqueous state is 6.8-7.5, still more preferably 7.0-7.2.

The adjustment of pH values ensures to increase saltiness, umami and richness and decrease sourness, thereby considerably improving overall sensory properties.

According to a disclosed embodiment, the mole ratio of L-glutamic acid to L-lysine in the present composition is 0.8-1.1:0.9-1.2, more preferably 0.9-1.0:1.0-1.1. The mole ratio is a determinant factor in improving sensory properties of the seasoning composition of the present invention.

According to a preferred embodiment, L-glutamic acid and L-lysine in the present seasoning composition are not substantially linked to each other by a covalent bond and an ionic bond.

According to a preferred embodiment, the composition further comprises at least one supplementary seasoning material selected from the group consisting of essential amino acids for seasoning, nucleic acids and organic acids.

Preferably, the essential amino acid is at least one selected from the group consisting of L-valine, L-leucine, L-isoleucine, L-phenylalanine, L-threonine, L-methionine, L-tryptophane and their combination and the essential amino acid is contained in the amount of 0.01-50 wt% (more preferably, 0.05-30 wt%) based on the composition.

Preferably, the nucleic acid is at least one selected from the group consisting of cytidine, uridine, adenosine, guanosine, thymidine, inosine and salt thereof, yeast extract, soy sauce powder and their combination and the nucleic acid is contained in the amount of 0.01-70 wt% (more preferably, 0.02-30 wt%) based on the composition.

Preferably, the organic acid is at least one selected from the group consisting of succinic acid, malic acid, citric acid, acetic acid, lactic acid, fumaric acid, tartaric acid, ascorbic acid, gluconic acid, their salts and their combination and the organic acid is contained in the amount of 0.01-80 wt% (more preferably, 0.5-30 wt%) based on the composition.

Preferably, the present seasoning composition comprises the essential amino acids, nucleic acids or organic acids in the amount of 0.01-50 wt% (more preferably, 0.02-30 wt%) based on the composition.

According to a preferred embodiment, the composition of the present invention has a taste enhancing potential to enhance saltiness and umami. Therefore, the present seasoning composition may not only replace a sodium ingredient but also exhibit better performance as seasonings.

In further aspect of this disclosure, there is provided a method for preparing a complex amino acid seasoning composition in the amorphous form, comprising:
(a) mixing L-glutamic acid and L-lysine in a solution at a mole ratio sufficient to exhibit pH 6.5-8.0; wherein L-glutamic acid and L-lysine are in the free base form; and
(b) drying the mixture of the step (a) to prepare a complex amino acid seasoning composition in the amorphous form.

The present method as an optimal preparation protocol for the complex amino acid seasoning composition of the present invention may provide an amino acid seasoning composition having excellent sensory properties in a relatively convenient manner.

L-glutamic acid and L-lysine in the free base form are mixed in a solution at a mole ratio to provide a mixture. The solution used is preferably water.

According to the present disclosure, L-lysine is used in the amount of 10-60 wt% based on the total weight of the mixture and the mole ratio of L-glutamic acid to L-lysine is 0.9-1.0:1.0-1.1.

According to the present disclosure, the mixture exhibits pH 6.5-7.8.

According to a preferred embodiment, L-glutamic acid and L-lysine in the complex amino acid seasoning composition are in the free base form.

According to a preferred embodiment, L-glutamic acid and L-lysine in the complex amino acid seasoning composition are in the non-crystalline form.

According to a preferred embodiment, L-glutamic acid and L-lysine in the complex amino acid seasoning composition are not substantially linked to each other by a covalent bond and an ionic bond.

According to a preferred embodiment, the complex amino acid seasoning composition has a taste enhancing potential to enhance saltiness and umami.

According to the present disclosure, the mole ratio of the mixture in the step (a) is substantially maintained in the complex amino acid seasoning composition prepared in the step (b).

The drying in the step (b) may be carried out by a variety of conventional methods. For example, the mixture may be dried by either spray dry (SD) or freeze dry (FD).

The spray dry is a process to dehydrate or dry a liquid product containing at least one ingredient, giving products in the form of powder, fined granule or granule. The spray dry method is suitable in continuous preparation of dried solid products in the form of powder, fined granule, granule or aggregate from a liquid source such as solution, suspension and paste. The product obtained by the spray dry free-flowing particles with well-defined characteristics in terms of shape and size of particles and residual water content. Where water is employed as fluid, the temperature of dried air for spray dry is preferably 120-200°C, more preferably 140-180°C.

In another aspect of this disclosure, there is provided a method for seasoning a food, comprising: (a) selecting a food product; and (b) applying the complex amino acid seasoning composition (preferably, the complex amino acid seasoning composition comprising L-glutamic acid and L-lysine) to the food.

In still another aspect of this disclosure, there is provided a food product or functional food product, comprising the complex amino acid seasoning composition.

The food of the present disclosure is any food product known to one skilled in the art, including natural food products, meat processed food product, dairy food products, instant food products, fermented food products, noodle food products, meats (including raw, cooked, and dried meats), vegetables (including raw, pickled, cooked, and dried vegetables), fruits (including raw, cooked, and dried fruits), grains (including dried cereals and breads), processed foods (such as dried, canned or jarred sauces and soups) and snack foods, but not limited to.

As demonstrated in Examples 9-12, the complex amino acid seasoning composition of the present disclosure exhibits better saltiness enhancement compared with conventional seasoning compositions (*e.g.,* yeast extract and hydrolyzed wheat protein), thereby showing significant sodium reduction effects. Therefore, the amino acid seasoning composition of the present disclosure leads to replacement or reduction of sodium in conventional food.

As described in Examples 9-12 representing results of application of the amino acid seasoning composition of the present disclosure to soup, sauce and seasoning, the amino acid seasoning composition of the present disclosure shows sodium reduction effects 2-4 fold higher than conventional seasoning compositions. Given the state of the art, these results are considerably interesting.

The sodium reduction effect by the present disclosure is preferably 20-100%, 20-80%, 20-70%, 20-60%, 30-100%, 30-80%, 30-70% or 30-60%. The term "%" with reference to sodium reduction effects refers to the percentage amount of salt (NaCl) replaced by the present composition with maintaining saltiness identical to saltiness of reference.

Where a food is prepared using the amino acid seasoning composition of the present disclosure, its sensory properties (particularly saltiness and umami) are greatly improved and its sodium content can be replaced or reduced. Therefore, the amino acid seasoning composition of the present disclosure can provide foods with excellent taste and nutritional properties.

In further aspect of this disclosure, there is provided a method for removing a offensive odor of an amino acid seasoning composition, comprising: applying L-arginine to the amino acid seasoning composition.

L-arginine is applied to amino acid seasoning compositions for removing a offensive odor caused by amino acids in amino acid seasoning compositions. The amino acid seasoning composition with removed offensive odor by the present invention may contain various amino acids, e.g., glutamic acid, lysine, alanine, proline, serine, aspartic acid, histidine or combination thereof. Preferably, the amino acid seasoning composition may contain glutamic acid, lysine or combination thereof.

The amount of arginine is preferably 1-20 mole wt%, more preferably 1-10 mole wt%, still more preferably 3-8 mole wt%, still further more preferably 4-5 mole wt%.

### EFFECTS

The features and advantages of this disclosure will be summarized as follows:
(a) The present disclosure provides amino acid seasoning compositions comprising L-glutamic acid and a basic amino acid (preferably, L-lysine).
(b) The present disclosure enables to block bitterness and offensive odor originated from amino acid ingredients, providing health-friendly seasoning compositions with excellent sensory properties in terms of saltiness and umami and nutrition properties.
(c) The seasoning composition of the present disclosure uses L-glutamic acid and a basic amino acid (preferably, L-lysine) with elaborately adjusting pH values such that seasoning compositions with excellent sensory properties may be provided.
(d) The seasoning composition of the present disclosure can be prepared with no formation of L-glutamic acid·L-lysine crystals in a very convenient and cost-effective manner. The seasoning composition of the present disclosure is completely free from problematic sensory properties of conventional seasoning compositions in the form of L-glutamic acid·L-lysine crystals. Furthermore, the seasoning composition of the present disclosure is excellent in light of nutrition. Consequently, the seasoning composition of the present disclosure is significantly advantageous over conventional technologies in terms of sensory properties, applicability and cost-effectiveness.

### BRIEF DESCRIPTION OF THE DRAWINGS

Fig. 1 represents analysis results using an electronic tongue system for sensory properties of the seasoning compositions with different pH values (*i.e.,* different mole ratios of L-glutamic acid to L-lysine).
Fig. 2 represents images of electron microscopic observation on seasoning compositions in either the amorphous form or the crystalline form. The panel A corresponds to images at 100x magnification of scale and the panel B to images at 500x magnification of scale.
Fig. 3 represents images of electron microscopic observation on seasoning compositions in either the amorphous form or the crystalline form. The panel C corresponds to images at 1000x magnification of scale and the panel D to images at 10000x magnification of scale.
Fig. 4 represents analysis results using an electronic tongue system for sensory properties of the seasoning compositions. The symbol "LG(Lys, Glu)" denotes the L-glutamic acid/L-lysine seasoning powder of the present disclosure. The sensory properties of salt (NaCl) are scored as 0. The scores for other seasonings are relative to those of salt (NaCI).

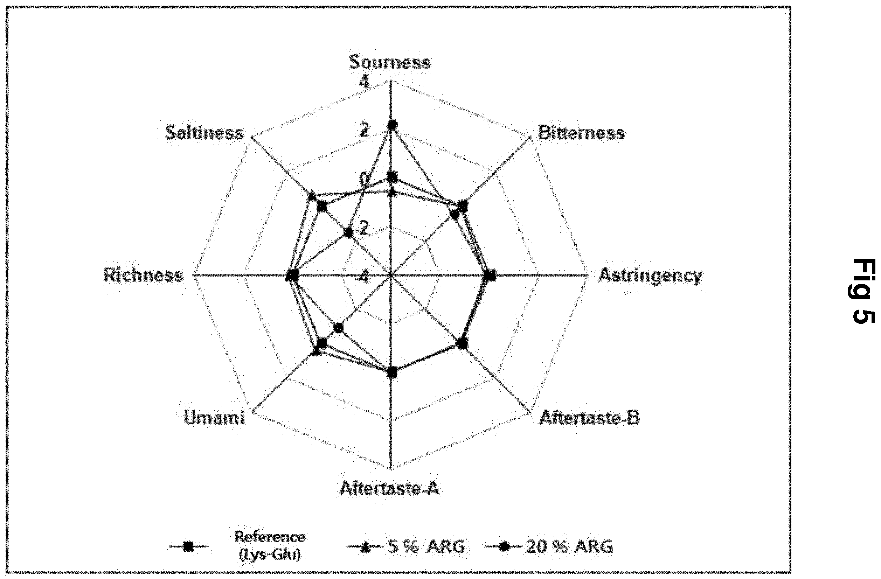

Fig. 5 represents analysis results on changes of sensory properties by adding L-arginine to L-glutamic acid/L-lysine.
Figs. 6a-6b represent measurement results of saltiness enhancement of L-glutamic acid/L-lysine solution.
Figs. 7a-7b represent panel test result (Fig. 7a) and electronic tongue analysis results (Fig. 7b) on saltiness enhancement and sodium reduction effects by L-glutamic acid/L-lysine applied to potato soup.
Figs. 8a-8b represent panel test result (Fig. 8a) and electronic tongue analysis results (Fig. 8b) on saltiness enhancement and sodium reduction effects by L-glutamic acid/L-lysine applied to Alfredo sauce.
Fig. 9 represents panel test results on saltiness enhancement and sodium reduction effects by L-glutamic acid/L-lysine applied to seasoning for potato chip.
Fig. 10 represents analysis results using an electronic tongue system for addition of valine with various concentrations to L-glutamic acid/L-lysine amino acid seasoning.
Fig. 11 represents analysis results using an electronic tongue system for addition of isoleucine with various concentrations to L-glutamic acid/L-lysine amino acid seasoning.
Fig. 12 represents analysis results using an electronic tongue system for addition of leucine with various concentrations to L-glutamic acid/L-lysine amino acid seasoning.
Fig. 13 represents analysis results using an electronic tongue system for addition of nucleic acids with various concentrations to L-glutamic acid/L-lysine amino acid seasoning.
Fig. 14 represents analysis results using an electronic tongue system for addition of high nucleic acid-content yeast extract with various concentrations to L-glutamic acid/L-lysine amino acid seasoning.
Fig. 15 represents analysis results using an electronic tongue system for addition of 0.02 wt% succinic acid, malic acid or citric acid to L-glutamic acid/L-lysine amino acid seasoning.

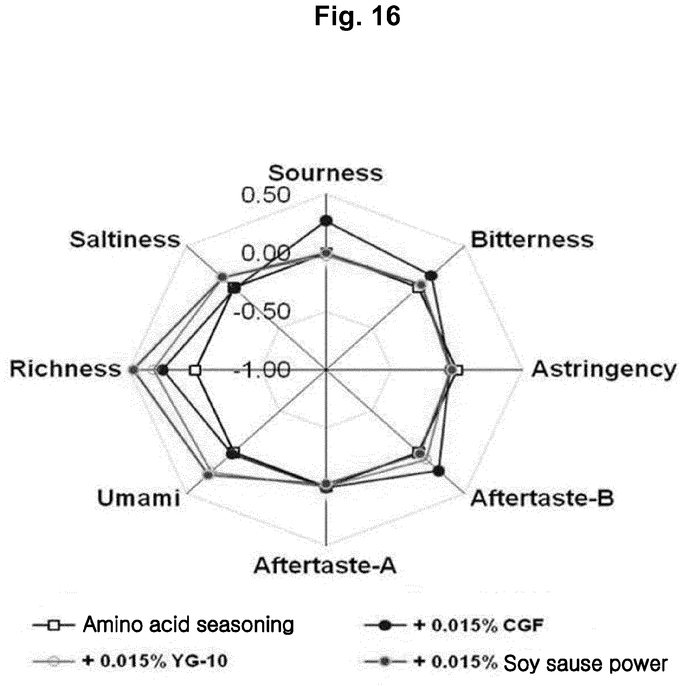

Fig. 16 represents analysis results using an electronic tongue system for addition of 0.015 wt% soy sauce powder, yeast extract or chlorella extract to L-glutamic acid/L-lysine amino acid seasoning.

### PREFERABLE EMBODIMENTS

The present invention will now be described in further detail by examples.

### EXAMPLES

The amino acid seasoning composition of the present disclosure is a complex seasoning composition comprising glutamic acid and a basic amino acid. Most preferably, the amino acid seasoning composition comprises L-lysine or arginine as basic amino acids and glutamic acid as acid amino acids in a mole weight ratio of 1.0-1.1:0.9-1.0. Each amino acid prepared by fermentation and purification is in purity of above 99% and in the form of liquid or powder. The form of amino acids used is not limited.

In a preferred disclosure, the amino acid seasoning composition comprises L-glutamic acid of less than 50 mole wt% and the basic amino acid of more than 50 mole wt%. Where the amino acid seasoning composition comprises both L-lysine and L-arginine, the amount of L-lysine is more than 30 mole wt% and the amount of L-arginine is less than 20 mole wt%. In a preferred disclosure, the amino acid seasoning composition has pH 6.5-8.0 in aqueous solution. The amino acids used in the amino acid seasoning composition may in the form of liquid or powder, but not limited to. The amino acid seasoning composition may be prepared by hot-air dry, freeze dry or concentrated crystallization.

### EXAMPLE 1: Preparation of L-glutamic acid/L-lysine Complex Amino Acid Seasoning Composition (comparative)

L-Lysine in the free base form (hereinafter referred to as L-lysine) was used. Alternatively, L-lysine was prepared from L-lysine hydrochloric acid salt by desalting and purification.

L-Lysine was commercially available or prepared by the present inventors. For example, the preparation of L-lysine may be performed as follows: Fermentation is carried out using a Corynebacteria strain to obtain a fermented medium containing lysine. The fermented medium containing lysine is centrifuged to remove the bacteria and the resulting supernatant is loaded onto strong-acid cation exchange column to adsorb lysine and remove residual sugars and anion species. The lysine adsorbed is eluted using ammonium hydroxide (NH₄OH) and the elutant is then applied to strong-base anion exchange column to adsorb colorants for discoloration. The fractions containing L-lysine are incubated with 5 wt% activated charcoal for 30 min for discoloration and filtered, followed by passing through a sterile filter of less than 0.45 µm. The L-lysine liquid sterilized is concentrated to more than 50 wt% concentration and used. Alternatively, the concentrated L-lysine liquid is dried by spray dry to obtain L-lysine powder with more than 98 wt% L-lysine.

L-Glutamic acid was commercially available or prepared by the present inventors. For example, the preparation of L-glutamic acid may be performed as follows: Fermentation is carried out using a bacteria strain to obtain a fermented medium containing glutamic acid. After removal of the bacteria, the fermented medium containing glutamic acid is adjusted to show pH 3.2-3.4 and crystallized to yield glutamic acid crystals. The glutamic acid crystal is dissolved in water and then re-crystallized, followed by drying to obtain L-glutamic acid in the free base form.

The L-glutamic acid powder and the L-lysine powder (or its hydrated solution) was mixed or agitated at a specific mole ratio in water to give a homogeneous solution. The homogeneous solution was adjusted to show pH 6.5-7.5 by controlling the mole ratio of L-lysine to L-glutamic acid (*e.g.,* 1.00:0.98, pH 7.2 at 5 wt% concentration), thereby giving a homogeneous solution having more than 30 mole wt% of L-lysine and L-glutamic acid. The solution was filtered for sterilization (0.45 µm MF) and dried by spray dry or freeze dry to yield seasoning powder in the amorphous form. The dried products contain amino acids of more than 98 wt% (based on dry weight) and water of less than 12 wt%.

### EXAMPLE 2: Analysis of Particle Shape and Size Distribution of L-glutamic acid/L-lysine Complex Amino Acid Seasoning Composition (comparative)

The non-crystalline mixed solution of L-glutamic acid and L-lysine prepared in Example 1 was dried in accordance with spray dry (SD) or freeze dry (FD). In addition, the powder of L-glutamic acid·L-lysine crystals was prepared as previously reported. Briefly, methyl alcohol was introduced into a mixed solution of L-glutamic acid and L-lysine and heated, followed by homogenization. The homogenized solution was cooled to produce L-glutamic acid·L-lysine crystals and dried to yield the powder of L-glutamic acid·L-lysine crystals.

Particle shape and size distribution analyses for the three types of powder were undertaken.

The particle shape was analyzed under an electron microscope. A carbon tape was attached to stub and each sample to be analyzed was then attached onto the carbon tape, followed by drying at 30°C for 2 hr in a vacuum drying oven. The dried sample was subjected to PT coating for 120 sec using a platinum deposition devise (Hitachi E-1030). Afterwards, the stub was placed onto a scanning electron microscope (SEM, Hitachi S-4700) for observation. The particle size distribution was measured using Microtrac S3500. The samples were prepared in the powder form and ethanol was used as fluid. The running time was 30 sec and the particle size distribution was calculated with the average value of three independent measurements.

Figs. 2 and 3 are images of electro microscopic observation (Fig. 2, panel A (100x) and panel B (500x); Fig. 3, panel C (1000x) and panel D (10000x)). As shown in Figs. 2 and 3, the spray-dried powder (SD) of L-glutamic acid/L-lysine prepared by the present disclosure was observed as amorphous (non-crystalline) particles. The size distribution and the average size of the spray-dried powder were measured as 7.0-325.0 µm and 61.83 µm, respectively. The freeze-dried powder (FD) of L-glutamic acid/L-lysine prepared by the present disclosure was also observed as amorphous (non-crystalline) particles. The size distribution and the average size of the freeze-dried powder were measured as 6.0-995.5 µm and 471.7 µm, respectively. Meanwhile, the size distribution and the average size of the L-glutamic acid·L-lysine crystals were analyzed as 2.5-995.5 µm and 388.3 µm, respectively.

It was clearly observed that the powders (SD and FD) of L-glutamic acid/L-lysine prepared by the present disclosure had distinctly different particle shapes and sizes from those of the L-glutamic acid·L-lysine crystals.

These electron microscopic analyses urge the inventors to reason that the seasoning composition containing L-glutamic acid/L-lysine prepared by the present disclosure has the amorphous form and distinctly different particle characteristics from those of the L-glutamic acid·L-lysine crystals prepared by conventional technologies, which contributes to sensory properties of the seasoning composition of the present disclosure.

### EXAMPLE 3: Sensory Evaluation of Seasoning Composition with Different Mole Ratios of L-glutamic acid and L-lysine (comparative)

The seasoning compositions with different mole ratios of L-glutamic acid and L-lysine were prepared by the present method. For example, L-glutamic acid in free base form (M.W., 147.1) was added into 200 ml of aqueous solution containing 10 g of L-lysine in the free base form (M.W., 146.2) and mixed at a mole ratio of 1.0-1.1:0.9-1.0 (L-glutamic acid to L-lysine). The resulting aqueous solution was measured to have pH values of 6.0-7.5.

Depending on mole ratios of L-glutamic acid to L-lysine used, the pH values of the seasoning composition in a liquid phase were changed. The sensory evaluation were carried out by panes of professional assessors (n=12) for determining difference of sensory properties depending on mole ratios of L-glutamic acid to L-lysine used.

As the amount of L-lysine became larger than that of L-glutamic acid, the umami taste of the seasoning compositions was increased. The seasoning compositions having pH values of more than 6.45 were evaluated to have preference in overall sensory properties (see Table 1). Meanwhile, the amount of L-lysine became larger than that of L-glutamic acid, the offensive odor originated from amino acids was increased. In particular, the seasoning compositions having pH values of more than 7.54 were evaluated to have worse odor.

**TABLE 1.**

| **pH** | **Mole ratio (Lysine:Glutamic acid)** | **Umami (n=12)** | **Offensive odor (n=12)** |
|---|---|---|---|
| 6.03 | 1.00 : 1.02 | (+) | (+++) |
| 6.45 | 1.00 : 1.01 | (+) | (++) |
| 6.83 | 1.00 : 0.99 | (++) | (+) |
| 7.03 | 1.00 : 0.97 | (+++++) | (++) |
| 7.54 | 1.00 : 0.93 | (+++++) | (+++++) |

Consequently, it would be understood that the complex amino acid seasoning composition of the present disclosure can accomplish optimal sensory properties such as umami taste by adjusting its pH value. The adjustment of pH value can be conveniently performed by mixing L-glutamic acid and L-lysine at a suitable ratio, finally providing amino acid seasoning compositions in the amorphous form. In contrast, conventional technologies to prepare L-glutamic acid·L-lysine crystals have serious problems in establishing pH conditions for optimal sensory properties such as umami taste, because pH values of seasoning compositions containing L-glutamic acid·L-lysine crystals are difficult to be adjusted.

### EXAMPLE 4: Sensory Evaluation of Seasoning Composition with Different pH Values (comparative)

The sensory properties were evaluated for the seasoning compositions prepared in Example 3 by use of an electronic tongue system (Sensing System TS-5000Z, Insent Inc. Japan). The measurement was carried out until 5 electrodes immersed in 35 ml of 1 wt% sample solution reached to equilibrium. The electrodes were washed and stabilized in a reference solution (containing 30 mM potassium chloride and 0.3 mM tartaric acid), and then each sample was analyzed. All measurements were performed in quadruplicate at room temperature.

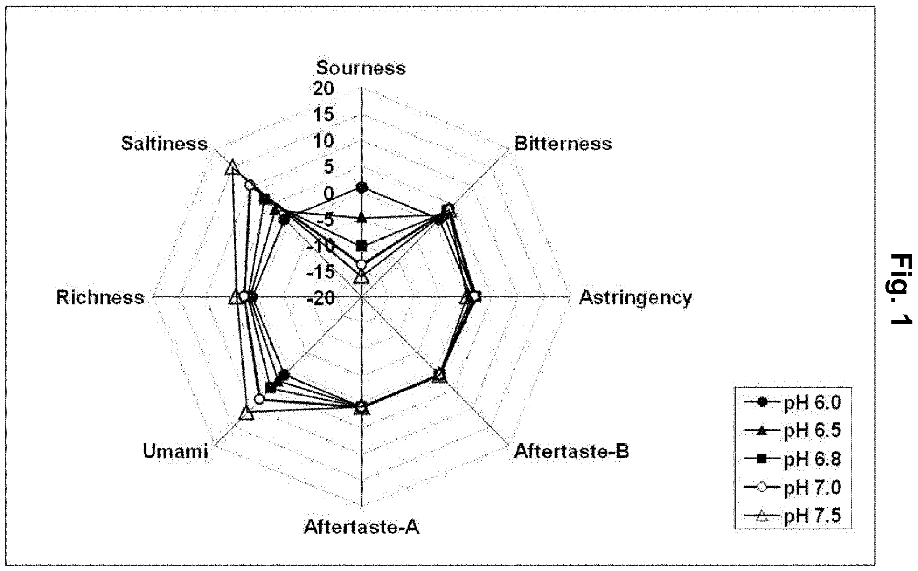

Like to results described in Table 1, the sensory properties were greatly affected by the mole ratios of L-glutamic acid to L-lysine in the evaluation using the electronic tongue system (see Fig. 1). As the pH values of the seasoning compositions were increased (higher content of L-lysine), several sensory properties including saltness, umami and richness were increased and sourness was sharply dropped, resulting in dramatic improvement in overall sensory properties of the seasoning compositions. These results are consistent with those of the sensory preference analysis in Example 3.

Accordingly, it would be appreciated that the pH condition at mixing L-glutamic acid and L-lysine in a liquid phase plays a critical role in determining sensory properties (in particular, umami taste) of the seasoning compositions finally obtained. The optimal pH values range from 6.5 to 7.5, which are controlled by mixing L-glutamic acid and L-lysine at mole ratios of 0.9-1.0:1.0:1.1.

### EXAMPLE 5: Enhancement in Saltiness and Umami Tastes of L-Glutamic Acid/L-Lysine Mixed (comparative)

The enhancement in saltiness and umami taste of L-glutamic acid/L-lysine mixed powders of the present disclosure was evaluated as comparative experiments with monosodium glutamate (MSG, Daesang Corp. Korea), yeast extract (Angel, China) and hydrolyzed vegetable protein (HVP, Givaudan, France). The sensory properties were evaluated for the seasoning compositions by use of the electronic tongue system as Example 4. Each sample to be measured was prepared by mixing 0.2 g of L-glutamic acid/L-lysine mixed powders of the present disclosure, MSG, yeast extract or HVP in 100 ml water containing 0.5 g NaCl.

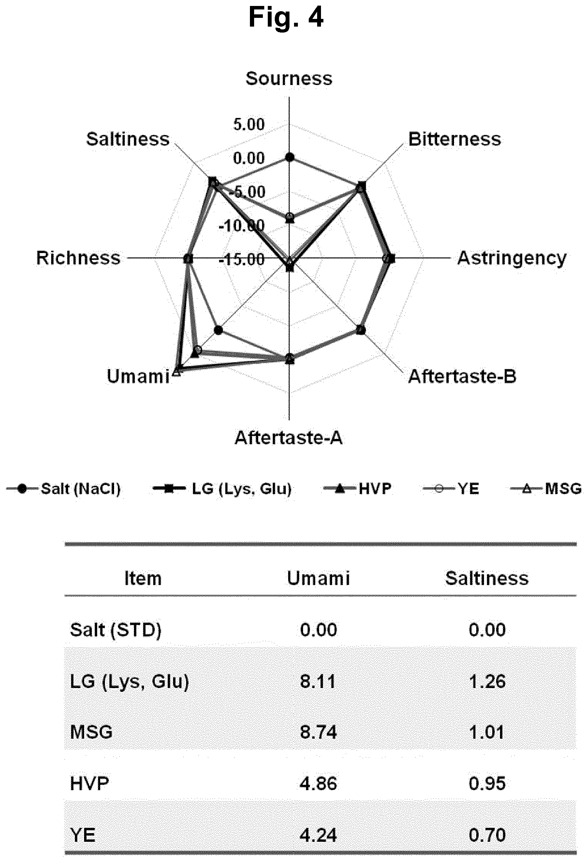

As represented in Fig. 4, the L-glutamic acid/L-lysine mixed powder of the present disclosure [LG(Lys, Glu)] shows significantly improved umami and saltiness tastes.

### EXAMPLE 6: Electronic Tongue Patterns of L-Arginine/L-Glutamic Acid Composition (comparative)

Differences of L-arginine solution (1.0 mole wt%), L-sodium glutamate (1.0 mole wt%) and a L-arginine/L-glutamic acid mixed composition (1:1 ratio, 2 mole wt%) in electronic tongue sensory property were compared by the method of the Example 4. As shown in Table 2, strong sourness, bitterness and saltiness of L-arginine were offset in the L-arginine/L-glutamic acid mixed composition, and thus the mixed composition represented taste patterns similar to those of generally used sodium glutamate. These results show that the mixed composition of L-arginine and L-glutamic acid also represent same taste and seasoning with those of L-lysine/L-glutamic acid mixed composition.

**Table 2**

| Comparison results of electronic tongue patterns between a L-arginine/L-glutamic acid mixed composition and sodium glutamate | | | | | | | | |
|---|---|---|---|---|---|---|---|---|
| | sourness | Bitterness | astringent taste | astringent taste aftertaste | bitterness aftertaste | umami | flavor | saltiness |
| L-sodium glutamate | -32.77 | -5.34 | -14.55 | 0.00 | -0.02 | 21.92 | 1.82 | 37.28 |
| L-arginine/ L-glutamic acid | -35.59 | -6.91 | -14.54 | -0.82 | -0.32 | 20.02 | 0.73 | 28.57 |

### EXAMPLE 7: Analysis of Effects by the Addition of L-Argine

As shown in the Example 3, a composition of L-lysine and L-glutamic acid showed increased effects on umami dependant on the increase in a mixed ratio of L-lysine, but at the same time bitterness of L-lysine, i.e., a offensive odor of L-lysine, increased. To solve this problem, the present inventors prepared each solution by adding L-lysine of 51, 50, 48.5, 46.0 or 31.0 mole wt% in proportion to the addition of L-arginine of 0, 1.0, 2.5, 5.0 or 20 mole wt% to L-lysine, and investigated sensory property patterns of the prepared solution using an electronic tongue system (Fig. 2). As a result, where added content of arginine was less than 5 mole wt%, a sour taste was decreased, and umami and saltiness were enhanced. In the meantime, where added content of arginine was more than 5 mole wt%, offensive odors of arginine was remained along with an increase in a sour taste.

### EXAMPLE 8: Comparison of Sensory Properties of Amino Acid Seasoning

Amino acid seasoning aqueous solution having a molar ratio of glutamic acid:lysine:arginine = 0.49:0.46:0.05 (concentration of 20 wt%, ph 7.2) was prepared on condition that an added ratio of arginine was 5 mole wt% showing sensory property enhancement, as demonstrated in the Example 7. The prepared aqueous solution was hot-air dried under 190°C (inlet temperature), dried powder was used as a sample for sensory test. bean sprouts soup and daikon soup were used to evaluate seasoning effects. After 0.4% sodium chloride was added, L-lysine, L-glutamic acid 0.16 wt% or the seasoning of the present invention 0.16 wt% was added to the soups when the soups come to a boil, and the soup was boiled for 5 min. After solid ingredients of the soup were removed, umami of the soup was compared. Preference was measured using 5-point rating scale method.

As shown in Table 3, in sensory test results by survey of 31 people, L-lysine/L-glutamic acid and L-lysine/L-glutamic acid/L-arginine all represented improvement on umami, and especially improvement by L-lysine/L-glutamic acid/L-arginine was very excellent.

**Table 3**

| | | male(n=23) | female(n=8) | total(n=31) |
|---|---|---|---|---|
| Non | bean sprouts soup | 2.4 | 1.9 | 2.3 |
| | daikon soup | 2.5 | 2.1 | 2.4 |
| L-lysine/L-glutamic acid | bean sprouts soup | 3.5 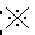 | 3.1 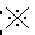 | 3.4 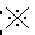 |
| | daikon soup | 3.6 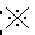 | 2.6 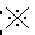 | 3.4 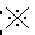 |
| L-lysine/L-glutamic acid/ L-arginine | bean sprouts soup | 3.8 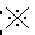 | 3.8 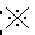 | 3.8 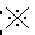 |
| | daikon soup | 3.5 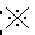 | 3.9 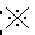 | 3.6 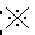 |

| | | | | |
|---|---|---|---|---|
| 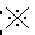 denotes that there is significance as compared with a control group (p<0.05; Dunnet's test; ANOVA, Duncan's test, p<0.05, SPSS 12.0 for Windows). | | | | |

### EXAMPLE 9: Measurement of Saltiness Enhancement of L-Lysine/L-Glutamic acid Solution (comparative)

Sensory test by 10 trained panels (n=10) was conducted using each concentration of slat (NaCl) standard solution in order to evaluate saltiness enhancement effects of amorphorous L-lysine/L-glutamic acid powder of the present disclosure (prepared in the Example 1). Yeast extract powder (YE; Angel, China) as general seasoning, hydrolyzed vegetable protein powder (HVP; Givaudan, France) and the L-lysine/L-glutamic acid powder were compared in terms of the enhancement effect on saltiness each other. That is, sample solution was prepared by adding 0.2 g of each L-lysine/L-glutamic acid powder (Lys, Glu), yeast extract (YE) and HVP to 0.5 wt% NaCl solution, and then saltiness strength between each salt (NaCl) standard solution (0.4%(w/w), 0.5%(w/w), 0.6%(w/w) and 0.7%(w/w)) and sample solution was compared.

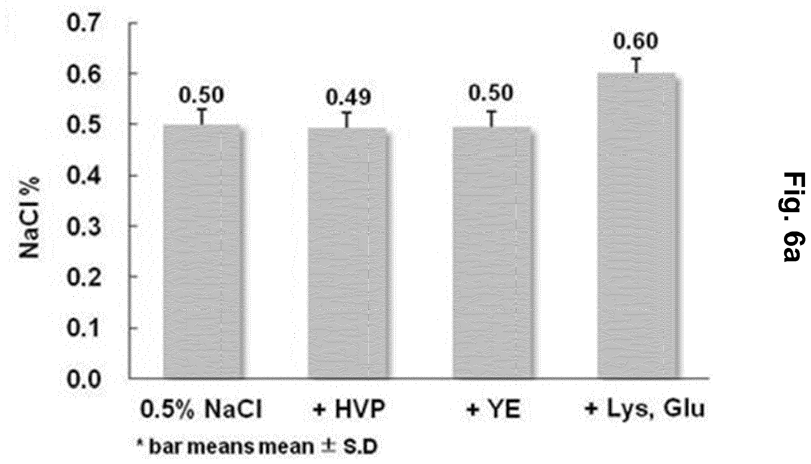

As shown in Fig. 6a and Table 4, saltiness of L-lysine/L-glutamic acid powder increased 1.2 fold compared to 0.5% slat standard solution, and its enhancement effect on saltiness was superior to that of yeast extract and HVP.

**Table 4**

| samples | NaCl (wt%) | Added content(wt%) | saltiness(%) | effects(%) |
|---|---|---|---|---|
| 0.5 wt% NaCl | 0.50 | 0.00 | 0.50 | 100 |
| +HVP | 0.50 | 0.20 | 0.49 | 99 |
| +YE | 0.50 | 0.20 | 0.50 | 99 |
| +L-Lys, L-Glu | 0.50 | 0.20 | 0.60 | 120 |

| | | | | |
|---|---|---|---|---|
| * Saltiness strength of sample solution was compared with that of salt (NaCl) standard solution (0.4%(w/w), 0.5%(w/w), 0.6%(w/w) and 0.7%(w/w)). | | | | |

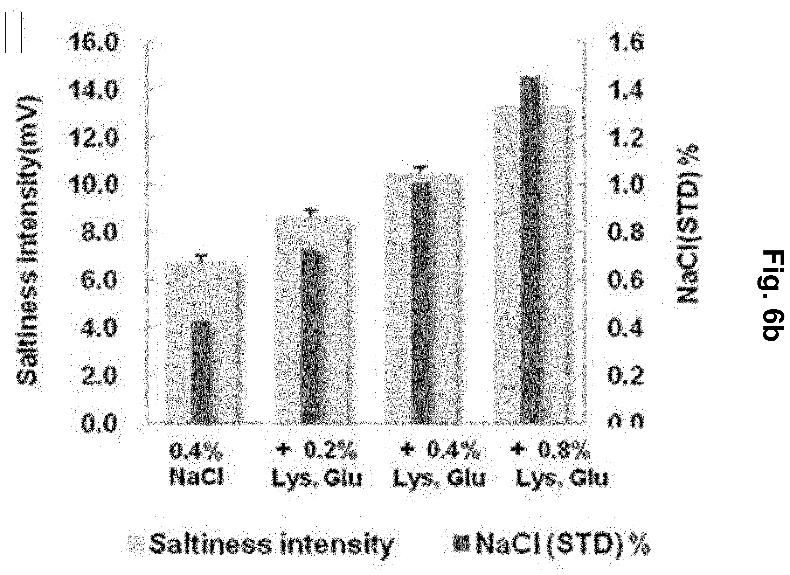

In addition, where each concentration of L-lysine/L-glutamic acid powder was added to salt standard solution, saltiness was increased in a concentration dependent manner(Fig. 6b). Saltiness data described in Fig. 6b is from an electric tongue system (TS-5000Z).

### EXAMPLE 10: Sodium Reduction Effects of L-lysine/L-glutamic acid powder in Potato Soup via Saltiness Enhancement (comparative)

Panel sensory test (n=10) and electric tongue analysis (TS-5000Z) were conducted to determine saltiness enhancement effects of L-lysine/L-glutamic acid powder (prepared in the Example 1) and some seasonings, by applying them to potato soup. For this analysis, potato soup as a reference group was prepared as described in Table 5, and potato soup as a control group was prepared by decreasing 30% salt from the reference group. In addition, potato soup as a comparison sample group was also prepared by adding 0.3 wt% L-lysine/L-glutamic acid powder, 0.3 wt% yeast extract or 0.3 wt% HVP to the control group. Sensory test by trained panels (n=10) was conducted to prepared reference samples, control samples and test samples via randomized blind study, and saltiness strength was evaluated using 9-point rating scale method. Results of the sensory test were reanalyzed with an electric tongue system to check correlation.

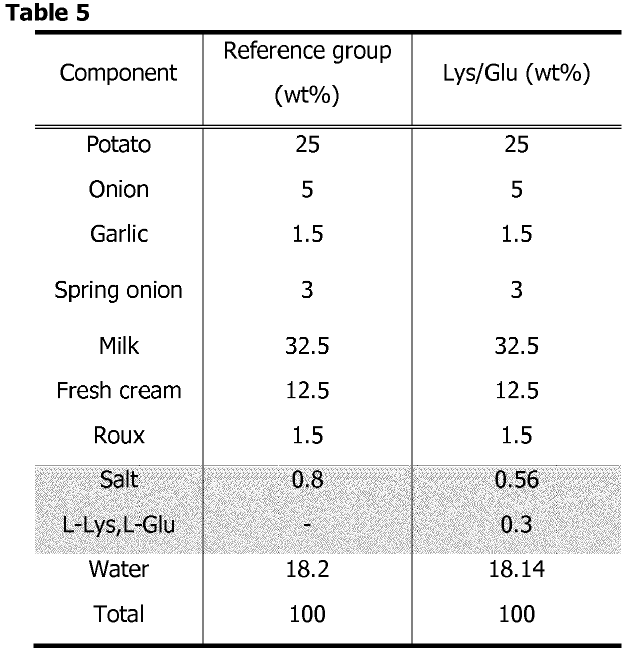

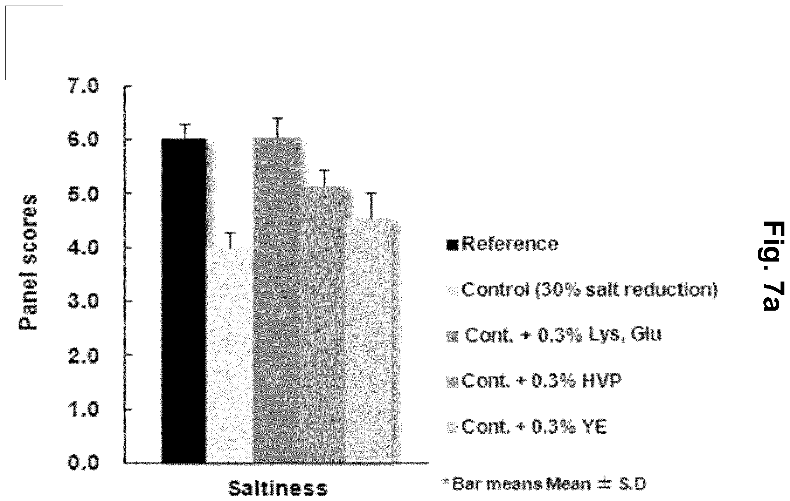

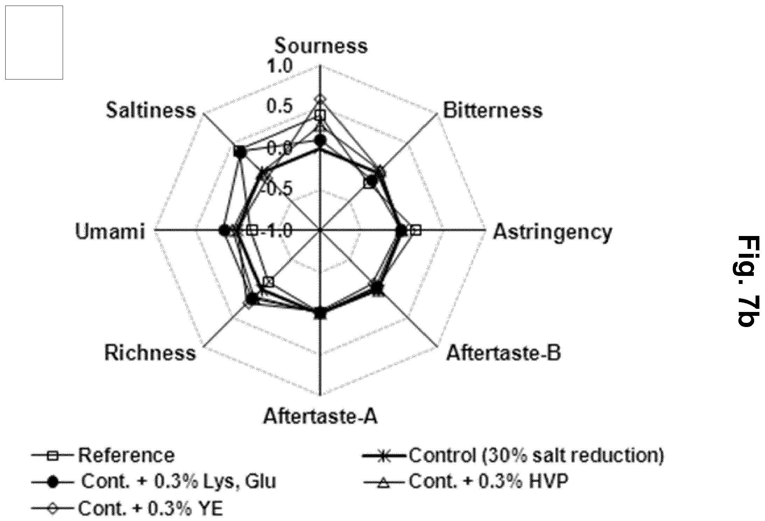

As shown in Fig. 7a and Table 6, the L-lysine/L-glutamic acid powder-added group represents an excellent decrease effect on sodium or salt (30.6%) via a superior saltiness enhancement effect, as compared with the reference group, and such decrease effect on sodium was superior to that of the HVP-added group (17.1%) and the YE-added group (8.1%). In addition, from electric tongue analysis, umami and saltiness strength of the L-lysine/L-glutamic acid powder-added group was the most superior than those of other sample groups, and especially, umami strength of the L-lysine/L-glutamic acid powder-added group was superior to that of the reference group (Fig. 7b and Table 7).

**Table 6**

| Sample | serving size* :g | Added content of salt (wt%) | Salt reduction effect (%) |
|---|---|---|---|
| Reference group | 100 | 0.80 | - |
| Control group | 100 | 0.56 | - |
| L-Lys,L-Glu | 100 | 0.56 | 30.6 |
| HVP | 100 | 0.56 | 17.1 |
| YE | 100 | 0.56 | 8.1 |

| | | | |
|---|---|---|---|
| * denotes offered amount per 1 person | | | |

**Table 7**

| Sample | Umami | Saltiness |
|---|---|---|
| Reference group | 11.73 | 4.77 |
| Control group | 11.90 | 4.39 |
| L-Lys,L-Glu | 12.07 | 4.69 |
| HVP | 11.95 | 4.39 |
| YE | 11.90 | 4.30 |

From the above results using potato soup, it was demonstrated that original umami and flavor (taste) can be remained by, and sodium-decreasing effects via saltiness enhancement can be achieved by the L-lysine/L-glutamic acid powder.

### EXAMPLE 11: Sodium Reduction Effects of L-lysine/L-glutamic acid powder in Alfredo sauce via Saltiness Enhancement (comparative)

Panel sensory test (n=10) and electric tongue analysis (Sensing System TS-5000Z, Insent Inc., Japan) were conducted to determine saltiness enhancement effects of L-lysine/L-glutamic acid powder (prepared in the Example 1) and some seasonings, by applying them to Alfredo sauce. For this analysis, Alfredo sauce as a reference group was prepared as described in Table 8, and Alfredo sauce as a control group was prepared by decreasing 30% salt from the reference group. In addition, Alfredo sauce as comparison sample groups was also prepared by adding 0.3 wt% L-lysine/L-glutamic acid powder, 0.3 wt% yeast extract (YE) or 0.3 wt% HVP to the control group. Sensory test by trained panels (n=10) was conducted to prepared reference samples, control samples and test samples via randomized blind study, and saltiness strength was evaluated using 9-point rating scale method. Results of the sensory test were reanalyzed with an electric tongue system to check correlation.

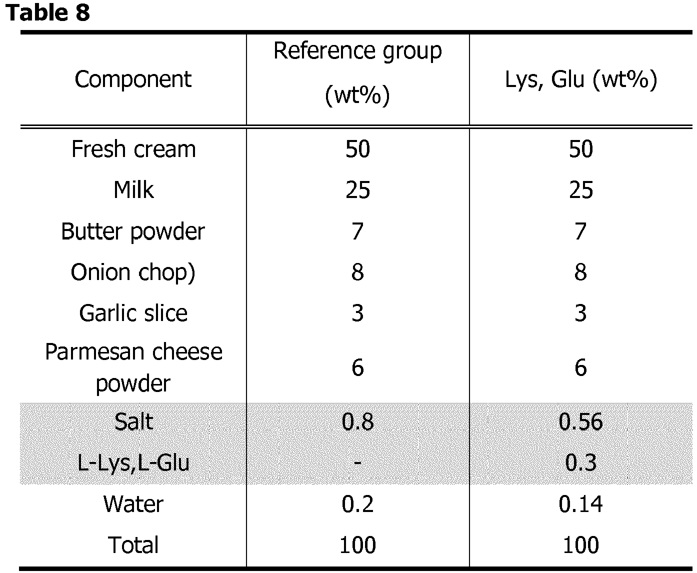

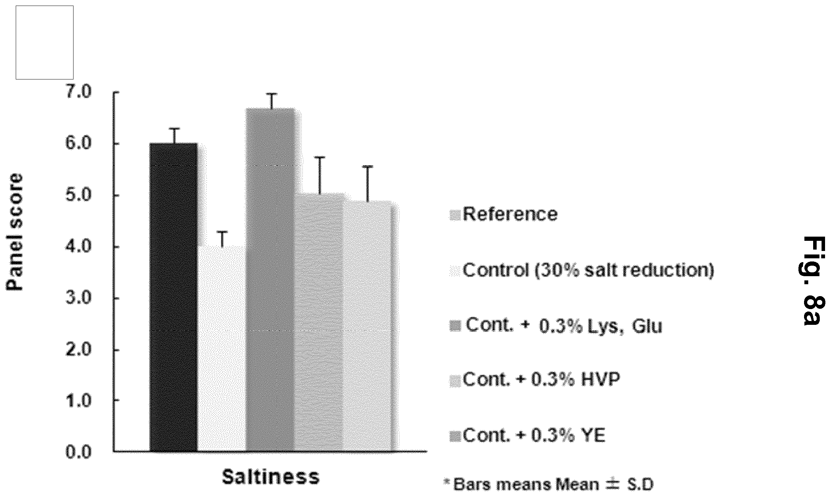

As shown in Fig. 8a and Table 9, the L-lysine/L-glutamic acid powder-added group represents an excellent decrease effect on sodium or salt (40.2%) via a superior saltiness enhancement effect, as compared with the reference group, and such sodium decrease effect was superior to that of the HVP-added group (15.6%) and the YE-added group (13.2%).

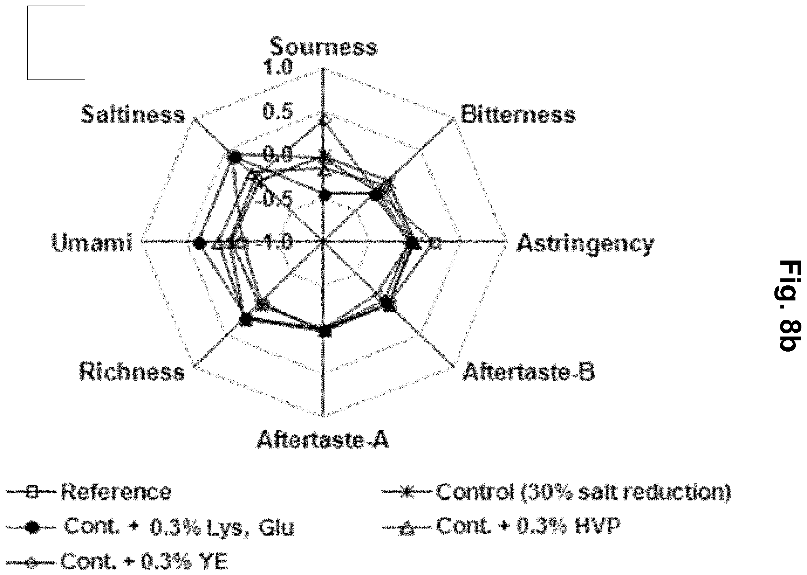

In addition, from electric tongue analysis, umami and saltiness strength of the L-lysine/L-glutamic acid powder-added group was the most superior than those of other sample groups, and astringent taste of the L-lysine/L-glutamic acid powder-added group was decreased than the reference group, thereby enhancing flavor (Fig. 8b and Table 10).

**Table 9**

| Sample | serving size: g | Added content of salt (wt%) | Salt reduction effect (%) |
|---|---|---|---|
| Reference group | 60 | 0.80 | - |
| Control group | 60 | 0.56 | - |
| L-Lys,L-Glu | 60 | 0.56 | 40.2 |
| HVP | 60 | 0.56 | 15.6 |
| YE | 60 | 0.56 | 13.2 |

**Table 10**

| Sample | Umami | Saltiness |
|---|---|---|
| Reference group | 10.72 | 4.45 |
| Control group | 10.83 | 4.02 |
| L-Lys,L-Glu | 11.20 | 4.42 |
| HVP | 10.99 | 4.15 |
| YE | 10.86 | 4.07 |

From the above results using Alfredo sauce, it was demonstrated that original umami and flavor can be tasty by, and sodium-decreasing effects via saltiness enhancement can be achieved by L-lysine/L-glutamic acid powder.

### EXAMPLE 12: Sodium Reduction Effects of L-lysine/L-glutamic acid powder in Potato crisps via Saltiness Enhancement (comparative)

L-lysine/L-glutamic acid powder (prepared in the Example 1) and some seasonings were applied to seasoning for potato crisps, and saltiness enhancement effects of them were determine from panel sensory test (n=10). Samples were prepared by methods as described in the Examples 10 and 11, and prepared samples were used for sensory test and electric tongue analysis.

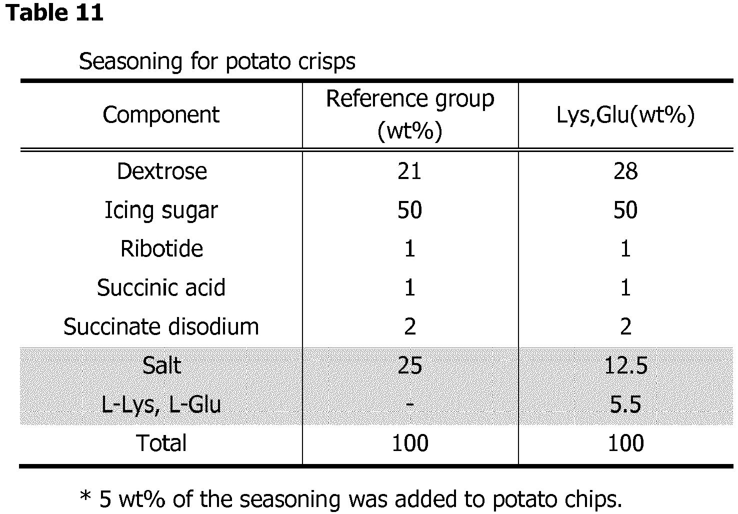

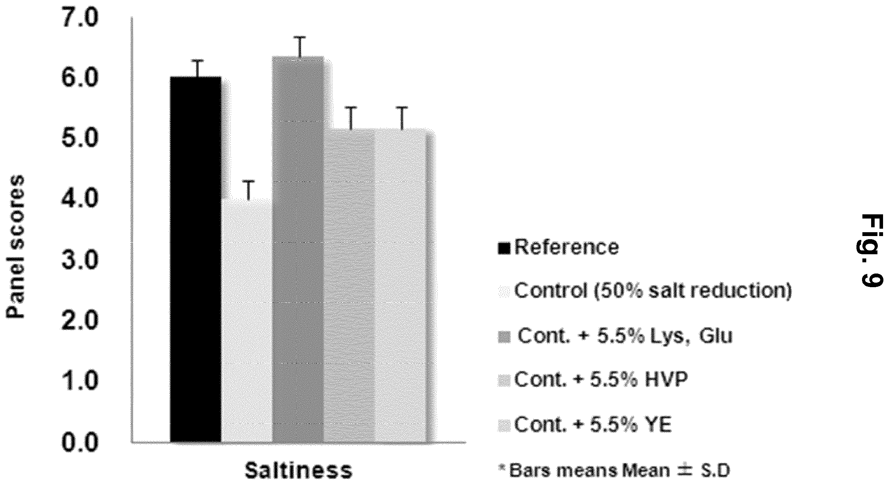

As shown in Fig. 9 and Table 12, the L-lysine/L-glutamic acid powder-added group represents an excellent decrease effect on sodium or salt (58.3%) via a significantly saltiness enhancement effect, as compared with the reference group, and such sodium decrease effect was about 2 fold higher than that of the HVP-added group (29.2%) and the YE-added group (29.2%).

**Table 12**

| Sample | serving size: g | Added content of salt (wt%) | Salt reduction effect (%) |
|---|---|---|---|
| Reference group | 20 | 1.0 | - |
| Control group | 20 | 0.5 | - |
| Lys.Glu | 20 | 0.5 | 58.3 |
| HVP | 20 | 0.5 | 29.2 |
| YE | 20 | 0.5 | 29.2 |

### Example 13: Sensory Evaluation of Essential Amino Acid-added Seasoning Composition throug the Electronic tongue (comparative)

To search a composition comprising L-lysine, L-glutamic acid complex amino acid seasoning (prepared in Example 1) as main ingredient, which enhances or maintains saltness-increasing effect, essential amino acids of valine (Ajinomoto, Japan), isoleucine (Ajinomoto, Japan) or leucine (Ajinomoto, Japan) were dissolved in a solution containing 0.5 Wt% salt and 0.2 Wt% amino acid seasoning at a concentration of 0.2 Wt%, and then the favor pattern was analyzed using electronic tongue system.

For sensory evaluation, electronic tongue system (Sensing System TS-5000Z, Insent Inc. Japan) was used. The measurement was carried out until 5 electrodes immersed in 35 ml of sample solution reached to equilibrium. The electrodes were washed and stabilized in a reference solution (containing 30 mM potassium chloride and 0.3 mM tartaric acid), and then each sample was analyzed. All measurements were performed in quadruplicate at room temperature.

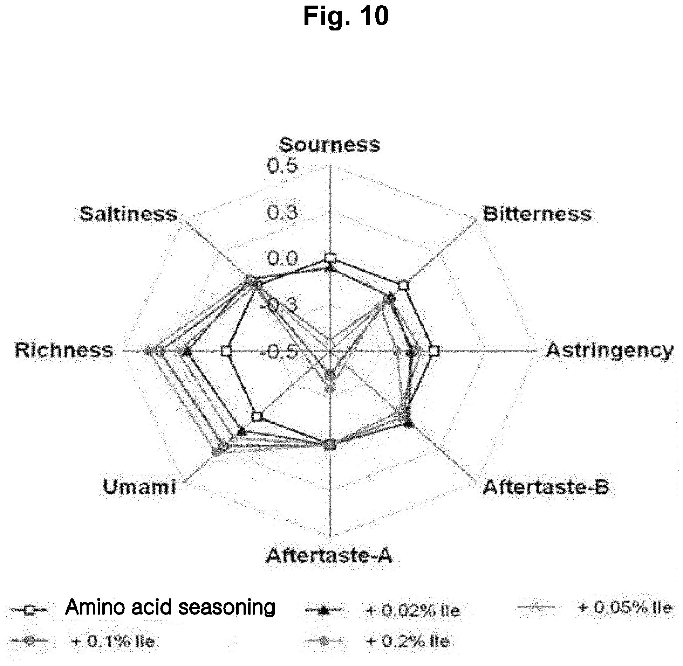

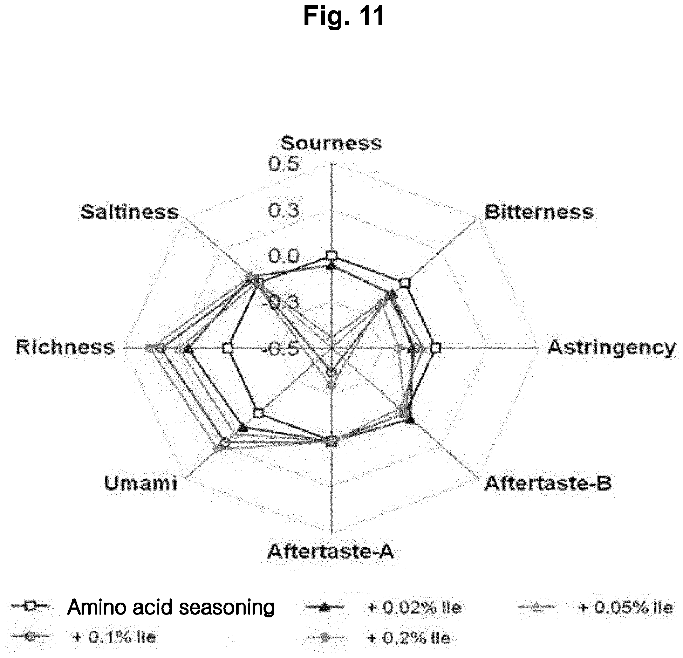

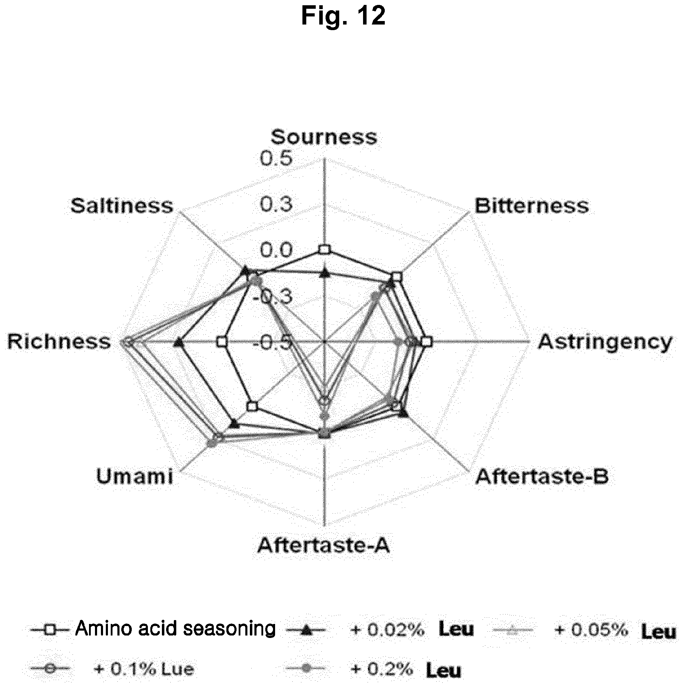

As shown in Figs. 10, 11 and 12, saltness and bitterness were decreased and umami was increased as the concentration of L-valine, L-isoleucine or L-leucine was increased. Especially, as shown in Fig. 12, addition of L-leucine increased umami of the amino acid seasoning most remarkably. Optimal concentration of L-leucine in view of umami-enhancing effect along with economical effectiveness, revealed to be 25 Wt% in case the sum of L-lysine and L-glutamic acid is 100 Wt%. in this case, it is preferred to adjust the amount of L-leucine to 0.05 Wt% compared to whole amino acid seasoning composition.

### Example 14: Sensory Evaluation of Nucleic Acid-added Seasoning Composition throug the Electronic tongue (comparative)

Sensory of the sample supplemented with nucleic acid (Daesang Corp. Korea) or nucleic acid-rich yeast extract (Daesang Corp. Korea) was evaluated as described in Example 13. Favor pattern was analyzed using electronic tongue system with nucleic acid at 1 Wt% to 10 Wt% of the complex amino acid seasoning, the concentration by which the strong favor of nucleic acid is not increased.

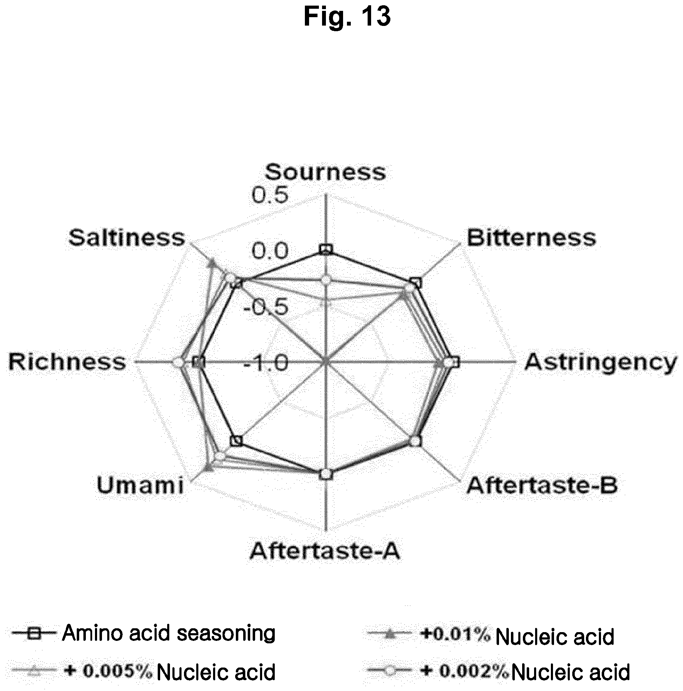

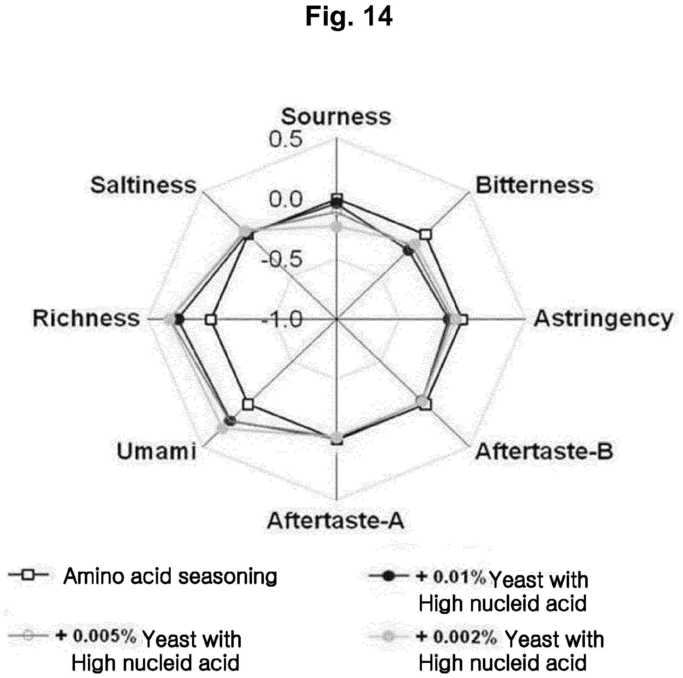

As shown in Figs. 13 and 14, both of nucleic acid and nucleic acid-rich yeast extract increased umami and saltness with increasing concentration. These two materials had been found to exhibit excellent sensory even at the concentration of 1 Wt% to 100 Wt% complex amino acid seasoning. Especially, 0.002 Wt% of nucleic acid-rich yeast extract remarkably improved umami compared to amino acid seasoning.

### Example 15: Sensory Evaluation of Organic Acid-added Seasoning Composition throug the Electronic tongue (comparative)

Sensory of the sample supplemented with succinic acid(FUSO chem., Japan), malic acid (FUSO chem., Japan) or citric acid(FUSO chem., Japan) was evaluated as described in Example 13.

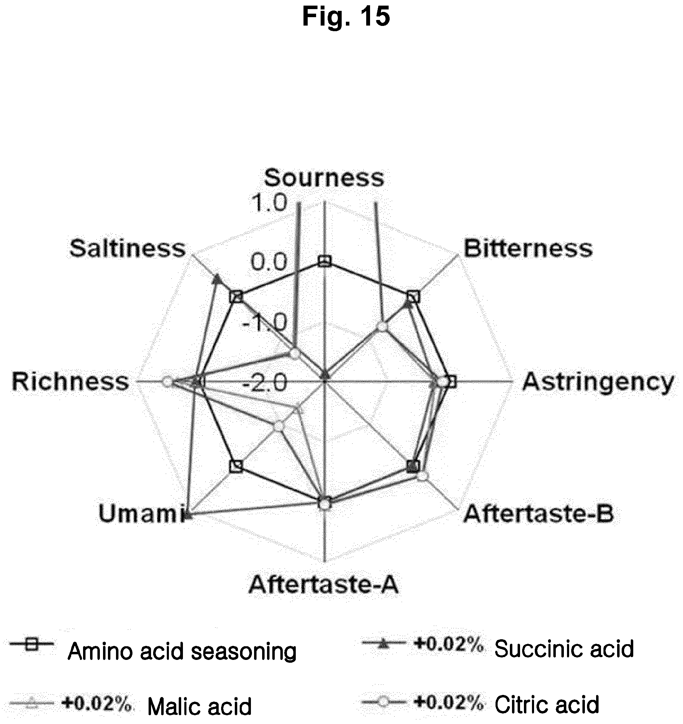

As shown in Fig. 15, addition of malic acid or citric acid decresed bitterness and also decreased umami of the amino acid seasoning resulting in reduce of seasoning effect. Addition of succinic acid significantly increased umami and saltness. Especially, succinic acid exhibits excellent improvement for umami of the amino acid seasoning.

### Example 16: Sensory Evaluation of Natural Seasoning Composition throug the Electronic tongue (comparative)

Natural seasoning of yeast extract (YG-10, Daesang Corp. Korea), soy sauce powder (42% salinity, Givaudan, Swiss) or chlorella extract (CGF, Daesang Corp. Korea) were added at 0.015% to the aqueous solution. Addition of natural seasoning led to improvement of favor. However, chlorella extract increased sourness and bitterness, and reduced umami resulting in reduce of seasoning effect. Soy sauce powder and yeast extract exhibits superior sensory feature with increasing umami and satness. It is indicated that two conventional natural seasoning, yeast extract and soy sauce powder are favorable combination with affirmative interaction.

### Example 17: Sensory Evaluation of Complex Amino Acid Seasoning (comparative)

Sensory evaluation was carried out with materials enhancing umami of the complex amino acid seasoning. 0.02 Wt% Yeast extract (YG-10), 0.002 Wt% 10% nucleic acid-containing yeast extract (YN-10), 0.002 Wt% nucleic acid (Daesang Corp. Korea) and 0.02 Wt% succinic acid were added to potato soup containig 0.2 Wt% complex amino acid seasoning. Prepared potato soup was presented to 14 pannels to analyze the degree of umami and saltness compared to potato soup without the amino acid seasoning by 5 point examination. The strength of umami and saltness compared to control established as very weak (1 point), weak (2 points), normal (3 points), strong (4 points) or very strong (5 points).

Table 14 represents the results of sensory evaluation. Umami of the amino acid seasoning recorded 2.6 points compared to control without the amino acid seasoning, and nucleic acid rich-yeast, nucleic acid and succinic acid gained high points indicating strong umamiof these samples.

These results are consistent with those analyzed by electronic tongue system, indicating improvement of umami in the complex amino acid composition.

**Table 13**

| Material | Contents (Wt%) |
|---|---|
| Potato | 23.1 |
| Milk | 34.6 |
| Cream | 11.5 |
| Distilled water | 19.2 |
| Roux | 1.3 |
| Onion | 6.2 |
| Garlic | 1.2 |
| green onion | 2.3 |
| amino acid seasoning + additives | 0.2 + 0.002 to 0.02 |

**Table 14**

| | Composition | Male (n=8) | Female (n=6) | Average |
|---|---|---|---|---|
| A | 0.2 Wt% amino acid seasoning | 2.8 | 2.5 | 2.6 |
| B | 0.2 Wt% amino acid seasoning + 0.02 Wt% yeast extract | 3.4 | 2.7 | 3.1 |
| C | 0.2 Wt% amino acid seasoning + 0.002 Wt% nucleic acid-rich yeast extract | 3.3 | 4.1 | 3.6 |
| D | 0.2 Wt% amino acid seasoning + 0.02 Wt% nucleic acid(IG) | 3.8 | 3.3 | 3.5 |
| E | 0.2 Wt% amino acid seasoning + 0.02 Wt% succinic acid | 3.5 | 5.0 | 4.1 |

## Claims

1. A complex amino acid seasoning composition which is in the form of a powder, comprising a mixture of 47 to 50wt% L-glutamic acid, 45 to 48wt% L-lysine and 4 to 5wt% L-arginine based on the total weight of the composition, wherein the complex amino acid seasoning composition is in an amorphous form and has a pH of 6.8-7.5 in an aqueous solution and; wherein the L-glutamic acid the L-lysine and the L-arginine in the complex amino acid seasoning composition are not linked to each other by a covalent bond.

2. The composition according to claim 1, wherein L-glutamic acid and the L-lysine and the L-arginine are in the free base form.

3. The composition according to claim 1, wherein the composition further comprises at least one supplementary seasoning material selected from the group consisting of essential amino acids for seasoning, nucleic acids and organic acids, wherein the essential amino acid is at least one selected from the group consisting of L-valine, L-leucine, L-isoleucine, L-phenylalanine, L-threonine, L-methionine, L-tryptophane and their combination.

4. The composition according to claim 3, wherein the essential amino acid is contained in the amount of 0.01-50 wt% based on the composition.

5. The composition according to claim 3, wherein the nucleic acid is at least one selected from the group consisting of cytidine, uridine, adenosine, guanosine, thymidine, inosine and salt thereof, and the nucleic acid is contained in the amount of 0.01-70 wt% based on the composition.

6. The composition according to claim 3, wherein the organic acid is at least one selected from the group consisting of succinic acid, malic acid, citric acid, acetic acid, lactic acid, fumaric acid, tartaric acid, ascorbic acid, gluconic acid, their salts and their combination and the organic acid is contained in the amount of 0.01-80 wt% based on the composition.

## Patentansprüche

1. Komplexe Aminosäure-Gewürzzusammenstellung, die in der Form eines Pulvers vorliegt, das auf Grundlage des Gesamtgewichts der Zusammenstellung ein Gemisch von 47 bis 50 Gew.-% L-Glutaminsäure, 45 bis 48 Gew.-% L-Lysin und 4 bis 5 Gew.-% L-Arginin umfasst, wobei die komplexe Aminosäure-Gewürzzusammenstellung in einer amorphen Form vorliegt und in einer wässrigen Lösung einen pH-Wert von 6,8-7,5 aufweist; und wobei die L-Glutaminsäure, das L-Lysin und das L-Arginin in der komplexen Aminosäure-Gewürzzusammenstellung nicht miteinander durch eine kovalente Bindung verbunden sind.

2. Zusammenstellung nach Anspruch 1, wobei die L-Glutaminsäure, das L-Lysin und das L-Arginin in freier basischer Form vorliegen.

3. Zusammenstellung nach Anspruch 1, wobei die Zusammenstellung ferner mindestens ein ergänzendes Gewürzmaterial umfasst, das aus der Gruppe ausgewählt ist, die aus essentiellen Aminosäuren zum Würzen, Nukleinsäuren und organischen Säuren besteht, wobei die essentielle Aminosäure mindestens eine ist, die aus der Gruppe ausgewählt ist, die aus L-Valin, L-Leucin, L-Isoleucin, L-Phenylalanin, L-Threonin, L-Methionin, L-Tryptophan und deren Kombination besteht.

4. Zusammenstellung nach Anspruch 3, wobei die essentielle Aminosäure auf Grundlage der Zusammenstellung in der Menge von 0,01-50 Gew.-% enthalten ist.

5. Zusammensetzung nach Anspruch 3, wobei die Nukleinsäure mindestens eine ist, die aus der Gruppe ausgewählt ist, die aus Cytidin, Uridin, Adenosin, Guanosin, Thymidin, Inosin und Salzen davon besteht, und wobei die Nukleinsäure auf Grundlage der Zusammenstellung in der Menge von 0,01-70 Gew.-% enthalten ist.

6. Zusammenstellung nach Anspruch 3, wobei die organische Säure mindestens eine ist, die aus der Gruppe ausgewählt ist, die aus Bernsteinsäure, Apfelsäure, Zitronensäure, Essigsäure, Milchsäure, Fumarsäure, Weinsäure, Ascorbinsäure, deren Salze und deren Kombination besteht und wobei die organische Säure auf Grundlage der Zusammenstellung in der Menge von 0,01-80 Gew.-% enthalten ist.

## Revendications

1. Composition complexe d'assaisonnement à base d'acides aminés qui est sous la forme d'une poudre, comprenant un mélange de 47 à 50 % en poids d'acide L-glutamique, de 45 à 48 % en poids de L-lysine et de 4 à 5 % en poids de L-arginine sur la base du poids total de la composition, dans laquelle la composition complexe d'assaisonnement à base d'acides aminés est sous forme amorphe et a un pH de 6,8-7,5 en solution aqueuse et ; dans laquelle l'acide L-glutamique, la L-lysine et la L-arginine dans la composition complexe d'assaisonnement à base d'acides aminés ne sont pas liés les uns aux autres au moyen d'une liaison covalente.

2. Composition selon la revendication 1, dans laquelle l'acide L-glutamique et la L-lysine et la L-arginine sont sous forme de base libre.

3. Composition selon la revendication 1, dans laquelle la composition comprend en outre au moins un matériau d'assaisonnement supplémentaire choisi dans le groupe constitué d'acides aminés essentiels destinés à l'assaisonnement, d'acides nucléiques et d'acides organiques, dans laquelle l'acide aminé essentiel est au moins un acide aminé choisi dans le groupe constitué de la L-valine, de la L-leucine, de la L-isoleucine, de la L-phénylalanine, de la L-thréonine, de la L-méthionine, du L-tryptophane et de leurs combinaisons.

4. Composition selon la revendication 3, dans laquelle l'acide aminé essentiel est contenu en la quantité de 0,01-50 % en poids sur la base de la composition.

5. Composition selon la revendication 3, dans laquelle l'acide nucléique est au moins un acide nucléique choisi dans le groupe constitué de la cytidine, de l'uridine, de l'adénosine, de la guanosine, de la thymidine, de l'inosine et de leurs sels, et l'acide nucléique est contenu en la quantité de 0,01-70 % en poids sur la base de la composition.

6. Composition selon la revendication 3, dans laquelle l'acide organique est au moins un acide choisi dans le groupe constitué de l'acide succinique, de l'acide malique, de l'acide citrique, de l'acide acétique, de l'acide lactique, de l'acide fumarique, de l'acide tartrique, de l'acide ascorbique, de l'acide gluconique, de leurs sels et de leurs combinaisons et l'acide organique est contenu en la quantité de 0,01-80 % en poids sur la base de la composition.
